# EUROPÄISCHE PATENTANMELDUNG

(11) **EP 4 602 910 A1**
(43) Veröffentlichungstag der Anmeldung: **20.08.2025**
(21) Anmeldenummer: 24157547.1
(22) Anmeldetag: 14.02.2024
(51) Int. Cl.: A01F 15/18, F16G 3/10, F16G 3/16

(54) **VERFAHREN ZUM HERSTELLEN EINES ENDLOSEN RIEMENS UND VERBINDUNGSMASCHINE**

(71) Anmelder: Arnold Jäger Holding GmbH, 30559 Hannover (DE)
(72) Erfinder: JÄGER, Sebastian, 30657 Hannover (DE)
(74) Vertreter: Lüdtke, Thomas

(57) **Zusammenfassung**

Die Erfindung betrifft ein Verfahren zum Herstellen eines endlosen Riemens für eine landwirtschaftliche Maschine (2) aus einem offenen Riemen (5O), mit mindestens den folgenden Schritten:
- Bereitstellen des offenen Riemens (5O), wobei der offene Riemen (5O) ein erstes und ein zweites Riemenende (6a, 6b) aufweist und der offene Riemen (5O) in ein Rollensystem der landwirtschaftlichen Maschine (2) derartig eingebracht ist, dass der offene Riemen (5O) auf mindestens einer Umlenkrolle und/oder auf mindestens einer Antriebsrolle des Rollensystems aufliegt;
- Bereitstellen einer Verbindungsmaschine (20);
- Positionieren und Fixieren des ersten Riemenendes (6a) des in das Rollensystem eingebrachten offenen Riemens (5O) in einem Arbeitsbereich (21) der Verbindungmaschine (20);
- Positionieren und Fixieren des zweiten Riemenendes (6b) des in das Rollensystem eingebrachten offenen Riemens (5O) in dem Arbeitsbereich (21) der Verbindungmaschine (20);
- Ausbilden einer Riemenverbindung (V) zwischen den beiden Riemenenden (6a, 6b) durch eine sich im Arbeitsbereich (21) der Verbindungsmaschine (20) befindliche Verbindungseinheit (22) zum Ausbilden des endlosen Riemens.

## Beschreibung

Die Erfindung betrifft ein Verfahren zur Herstellung eines endlosen Riemens als Zugmittel, insbesondere für Förderbänder landwirtschaftlicher Maschinen, insbesondere Ballenpressen, gemäß dem Oberbegriff des Anspruches 1. Die Erfindung betrifft weiterhin eine Verbindungsmaschine.

Endlose Riemen sind beispielsweise in der DE 10 2016 112 301 A1 oder DE 10 2004 023 705 B3 offenbart, die jeweils eine Maschine zum Aufnehmen und Pressen von landwirtschaftlichem Erntegut, z. B. Heu oder Stroh betreffen. Diese Maschine ist mit einem Ballenförderer ausgestattet, der zwei parallel zueinander beabstandete Riemen aufweist, die durch voneinander parallel beabstandete Querstäbe miteinander verbunden sind. Die Riemen bestehen aus einem Kunststoffmaterial oder aus Gummi und sind durch mindestens eine Gewebelage verstärkt. Innerhalb des Ballenförderers sind die endlosen Riemen über Umlenkrollen und Antriebsrollen eines entsprechenden Rollensystems geführt.

Die Riemen müssen für ihren Einsatz in dem jeweiligen Rollensystem in endloser Form vorliegen. Zur Herstellung einer derartigen endlosen Form sind aus dem Stand der Technik verschiedene Vorgehensweisen bekannt:
So ist es aus DE 100 37 645 A1 bekannt, die beiden Riemenenden des Riemens kammerartig zu verzahnen und die Verzahnungsbereiche zum Endlosmachen des Riemens ineinanderzuschieben und nach zu vulkanisieren. Gemäß DE 38 08 711 A1 ist vorgesehen, dass an den beiden Riemenenden metallische Armaturen befestigt sind, die im Wesentlichen u-förmig gestaltet und wechselseitig an den Riemenenden angeordnet sind. Die Schenkel der Armaturen schließen die Riemenende mit Pressung zwischen sich ein und sind durch Niete, die die Riemenenden durchsetzen befestigt. Die die Schenkel verbindenden etwa halbkreisförmigen Stege der Armaturen liegen wechselseitig an einem Stab an, der sich über die gesamte Breite der Riemenenden erstreckt und nach der Montage des Riemens eingeführt ist und zum Zwecke der Demontage des Riemens herausgezogen werden muss. Der Stab besteht aus einem geeigneten Metall, er kann aber auch als starkes Drahtseil ausgebildet sein. Eine ähnliche Lösung zum Verbinden der Riemenenden ist in DE 39 03 921 A1 gezeigt.

Eine weitere Riemenverbindung mit einem Stab ist in DE 32 46 530 A1 beschrieben, wobei der Stab oder Bolzen in eine Querbohrung eingesteckt ist, um die die Enden von einvulkanisierten Verstärkungseinlagen des Riemens umgelegt sind. Jedes Riemenende weist eine solche Querbohrung auf, so dass der Stab durch die Querbohrungen der beiden scharnierartig ineinandergesteckten Riemenenden geführt werden kann und die beiden Riemenenden dadurch zusammenhält.

In der EP 3 078 880 A1 oder EP 3 345 474 A1 erfolgt das Endlosmachen eines als Nockenriemen ausgeführten Zugmittels durch ein Riemenschloss. Derartige Riemenschlösser werden in verschiedenen Ausführungsformen häufig zum Endlosmachen von Zugmitteln für Förderbänder von landwirtschaftlichen Maschinen eingesetzt.

In der DE 10 2011 116 633 A1 ist weiterhin ein aus einem gewebelagenverstärkten Polymer hergestellter Flachriemen als Zugmittel bekannt. Das Endlosmachen dieses Riemens erfolgt dadurch, dass er an beiden Enden über die gesamte Breite mehrfach abgestuft ist. Dadurch ergibt sich ein Überlappungsbereich, in dem ein erster Endbereich des Riemens und ein zweiter Endbereich des Riemens überlappend aufeinander liegen. Der Riemen besitzt auf seiner Unterseite in gleichmäßigen Abständen angeordnete, sich quer zur Längsrichtung erstreckenden Nuten, die im Überlappungsbereich der Aufnahme von Ankerplatten dienen. Jede Ankerplatte weist zwei angeschweißte und voneinander beabstandete Schraubenbolzen auf. Bei aufeinandergelegten Riemenenden durchragen diese Schraubenbolzen in den Riemenenden vorgesehene, miteinander fluchtende Löcher. Auf die aus dem Riemen herausragenden Enden der Schraubenbolzen werden Muttern aufgedreht und fest angezogen, wodurch die Riemenenden zur Übertragung von Zugkräften fest aneinandergepresst werden.

In EP 3 667 118 A1 ist weiterhin beschrieben, die Riemenenden des Riemens durch eine Naht zu verbinden, die durch mindestens einen Faden ausgebildet wird, der die beiden Riemenenden in einem Nahtbereich in mehreren Stichen durchdringt.

Wird der jeweilige Riemen bereits vor dem Einfädeln um die Umlenkrollen und Antriebsrollen des jeweiligen Rollensystems in den endlosen Zustand gebracht, wie beispielsweise bei einem endlos genähten oder endlos vulkanisierten Riemen, ist das nachfolgende Einfädeln des unter Umständen sehr langen und breiten Riemens in der Regel sehr aufwändig.

Aufgabe der vorliegenden Erfindung ist daher, ein Verfahren anzugeben, mit dem die Montage oder die Installation eines endlosen Riemens in ein Rollensystem einer landwirtschaftlichen Maschine vereinfacht ist. Aufgabe ist weiterhin, eine Verbindungsmaschine bereitzustellen.

Diese Aufgabe wird durch ein Verfahren und eine Verbindungsmaschine gemäß den unabhängigen Ansprüchen gelöst. Die Unteransprüche geben dabei bevorzugte Weiterbildungen an.

Demnach ist ein Verfahren zum Herstellen eines endlosen Riemens für eine landwirtschaftliche Maschine, beispielsweise für eine Ballenpresse, aus einem offenen Riemen mit einer Verstärkungseinlage bzw. Gewebelage, die in eine Polymerlage bzw. Gummilage eingebettet ist, vorgesehen, das mindestens die folgenden Schritte aufweist:
- Bereitstellen des offenen Riemens, wobei der offene Riemen ein erstes Riemenende und ein zweites Riemenende aufweist und der offene Riemen in ein Rollensystem der landwirtschaftlichen Maschine derartig eingebracht ist, dass der offene Riemen auf mindestens einer Umlenkrolle des Rollensystems oder auf mindestens einer Antriebsrolle des Rollensystems oder auf beiden aufliegt, so dass der später ausgebildete endlose Riemen darauf abrollen kann;
- Bereitstellen einer Verbindungsmaschine;
- Positionieren des ersten Riemenendes des in das Rollensystem eingebrachten offenen Riemens in einem Arbeitsbereich der Verbindungmaschine;
- Positionieren des zweiten Riemenendes des in das Rollensystem eingebrachten offenen Riemens in dem Arbeitsbereich der Verbindungmaschine;
- Fixieren der beiden Riemenenden im Arbeitsbereich derartig, dass eine Relativbewegung zwischen den beiden Riemenenden im Arbeitsbereich verhindert wird;
- Ausbilden einer Riemenverbindung zwischen den beiden fixierten Riemenenden durch eine sich im Arbeitsbereich der Verbindungsmaschine befindliche Verbindungseinheit zum Ausbilden des endlosen Riemens während sich dieser zumindest teilweise in dem Rollensystem der landwirtschaftlichen Maschine befindet.

Die Erfindung betrifft auch die Verbindungsmaschine, mit dem dieses Verfahren durchgeführt werden kann.

Vorteilhafterweise ist also vorgesehen, dass der zunächst noch offene Riemen in das jeweilige Rollensystem zumindest teilweise eingefädelt wird bzw. der noch offene Riemen um die jeweiligen Rollen des Rollensystems umgelegt wird. Dies vereinfacht die Montage, da das Einbringen eines bereits endlos gemachten Riemens in der Regel sehr aufwändig ist, insbesondere wenn das Rollensystem sehr viele Rollen aufweist und der Riemen in unterschiedliche Richtungen umgelenkt wird. Das Rollensystem kann beispielsweise aus mehreren Umlenkrollen und mindestens einer Antriebsrolle bestehen, um wie üblich in einer Ballenpresse einen Strohballen durch Antreiben des endlosen Riemens auszubilden. Dabei wird der Riemen über zahlreiche Umlenkrollen umgelenkt. Es ist aber auch ein einfacheres Rollensystem denkbar, das aus nur einer Umlenkrolle und einer Antriebsrolle besteht, wie es beispielweise bei einem Förderband in einer landwirtschaftlichen Maschine zum Einsatz kommt. Auch bei einem solchen Rollensystem ist das erfindungsgemäße Verfahren anwendbar.

Das Zusammenfügen der Riemenenden kann bei einer Erstmontage erfolgen oder aber bei einer Reparatur, wenn beispielsweise die Riemenverbindung im Dauerbetrieb des endlosen Riemens beschädigt wurde und wieder aufgetrennt wurde. In dem Fall kann eine Reparatur "direkt im Feld" bzw. "direkt an der landwirtschaftlichen Maschine" erfolgen, indem der unter Umständen noch in das Rollensystem eingebrachte oder neu eingebrachte offene Riemen über die Verbindungsmaschine gemäß dem erfindungsgemäßen Verfahren erneut in seine endlose Form gebracht wird.

Die erfindungsgemäße Verbindungsmaschine ist dementsprechend derartig kompakt ausgebildet und durch einen Bediener handhabbar, dass diese in dem oder unmittelbar benachbart zu dem Rollensystem der landwirtschaftlichen Maschine an den offenen Riemenenden positioniert werden kann, so dass diese für den Verbindungsvorgang darin aufgenommen werden können. Insofern ist eine entsprechende Eignung der Verbindungmaschine für einen derartigen Einsatz gegeben, um die Riemenenden an der landwirtschaftlichen Maschine zusammenzufügen.

Gemäß einer Ausführung ist vorgesehen, dass die Riemenverbindung eine Nähverbindung ist, wobei die in der Verbindungsmaschine im Arbeitsbereich positionierten und fixierten Riemenenden zum Ausbilden der Nähverbindung durch mindestens einen eine Naht ausbildenden Faden miteinander vernäht werden, wobei der mindestens eine Faden die beiden Riemenenden in einem Nahtbereich in mehreren Stichen durchdringt oder durchstößt. Vorzugsweise überlappen sich die beiden positionierten und fixierten Riemenenden des offenen Riemens in dem Arbeitsbereich in einem Überlappungsbereich, wobei der Faden zum Ausbilden der Nähverbindung durch beide übereinanderliegenden Riemenenden gestoßen wird.

Durch eine solche Nähverbindung kann in einfacher Weise eine hochfeste und dauerbeständige Riemenverbindung ausgebildet werden. Dies kann dadurch optimiert werden, dass die Verstärkungseinlage bis zu den beiden Riemenenden ausgedehnt ist und daher auch in den Nahtbereich ragt und von den Stichen und dem Faden durchstoßen wird.

Um eine solche Nähverbindung auszubilden, ist vorzugsweise vorgesehen, dass die Verbindungseinheit in der Verbindungsmaschine eine Nadel aufweist, in der der Faden über eine entsprechende Fadenzuführung aufgenommen ist und die derartig relativ zu den in dem Arbeitsbereich positionierten und fixierten Riemenenden bewegt wird und dabei in dem Nahtbereich wiederholend durch die Riemenenden gestoßen wird, dass die Stiche ausgebildet und der mindestens eine Faden durch die ausgebildeten Stiche geführt wird, um in dem Nahtbereich die Naht auszubilden. Die relative Bewegung zwischen der Nadel und den Riemenenden kann durch eine Bewegung der Nadel selbst erreicht werden oder durch eine Bewegung der im Arbeitsbereich relativ zueinander fixierten Riemenenden, die beispielsweise auf einem beweglichen Arbeitstisch oder einer beweglichen Platte fixiert werden, oder durch eine Kombination von beiden.

Eine solche horizontale und vertikale relative Nadelführung (relativ zu den Riemenenden) ist mit einem oder mehreren Aktuatoren auf begrenztem Raum in einer kompakten Verbindungsmaschine umsetzbar, so dass die Nähverbindung auf diese Weise auch direkt an der landwirtschaftlichen Maschine ausgebildet werden kann. Für die Ansteuerung des jeweiligen Aktuators ist eine Steuereinheit vorzusehen, die ebenfalls platzsparend in der Verbindungsmaschine verbaut werden kann und die den Aktuator entsprechend einer vorgegebenen Nahtform ansteuert, um die Nadel in dem Nähbereich entsprechend zu führen.

Gemäß einer weiteren Ausführung, die alternativ zu der Nähverbindung oder ergänzend dazu angewandt werden kann, ist vorgesehen, dass die Riemenverbindung eine Klebeverbindung ist, wobei die beiden positionierten und fixierten Riemenenden zum Ausbilden der Klebeverbindung durch ein Klebemittel stoffschlüssig miteinander verbunden werden. Es ist also auch denkbar, die beiden Riemenenden direkt an der landwirtschaftlichen Maschine über die Verbindungsmaschine zusammenzukleben.

Vorzugsweise weist die Verbindungseinheit in der Verbindungsmaschine dazu mindestens eine Düse oder dergleichen auf, durch die das Klebemittel flächig auf zumindest eines der beiden Riemenenden aufgetragen wird, so dass bei einem nachträglichen Aufeinanderlegen und Gegeneinanderdrücken der beiden Riemenenden eine Klebeverbindung ausgebildet wird. Auch dies ist platzsparend möglich, so dass die Verbindungsmaschine in einfacher Weise von einem Bediener direkt im Feld oder direkt an der landwirtschaftlichen Maschine zum Ausbilden der Riemenverbindung verwendet werden kann, nachdem der offene Riemen zumindest teilweise in das Rollensystem eingefädelt oder eingebracht wurde.

Die Erfindung wird nachstehend anhand von Ausführungsbeispielen näher erläutert. Es zeigen:
Fig. 1 ein Rollensystem mit einem aufliegenden endlosen Riemen;
Fig. 2A ein offener Riemen vor dem Ausbilden einer Riemenverbindung;
Fig. 2B der endlose Riemen gemäß Fig. 1 mit ausgebildeter Nähverbindung;
Fig. 2C der endlose Riemen gemäß Fig. 1 mit ausgebildeter Klebeverbindung;
Fig. 3 schematische Ansicht einer Verbindungsmaschine zum Herstellen des endlosen Riemens gemäß Fig. 1.

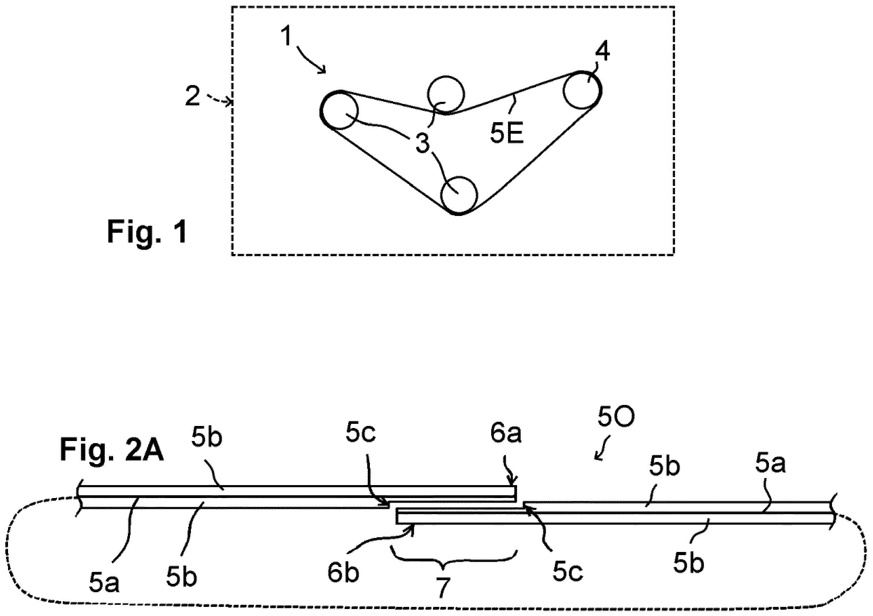

In Figur 1 ist schematisch ein Rollensystem 1 dargestellt, das in dieser Ausführungsform mehrere Umlenkrollen 3 und mindestens eine Antriebsrolle 4 aufweist. In vergleichbarer Form wird ein solches Rollensystem 1 in einer landwirtschaftlichen Maschine 2 (lediglich schematisch angedeutet), beispielsweise in einer Ballenpresse, eingesetzt. Um die Umlenkrollen 3 und die mindestens eine Antriebsrolle 4 ist ein endloser Riemen 5E geführt, der bei einer Antriebsbewegung der Antriebsrolle 4 über die Umlenkrollen 3 abrollt. Der endlose Riemen 5E kann als Flachriemen oder als Nockenriemen ausgeführt sein, der dementsprechend auf flachen oder mit Nocken versehenen Umlenkrollen 3 und Antriebsrollen 4 abrollt.

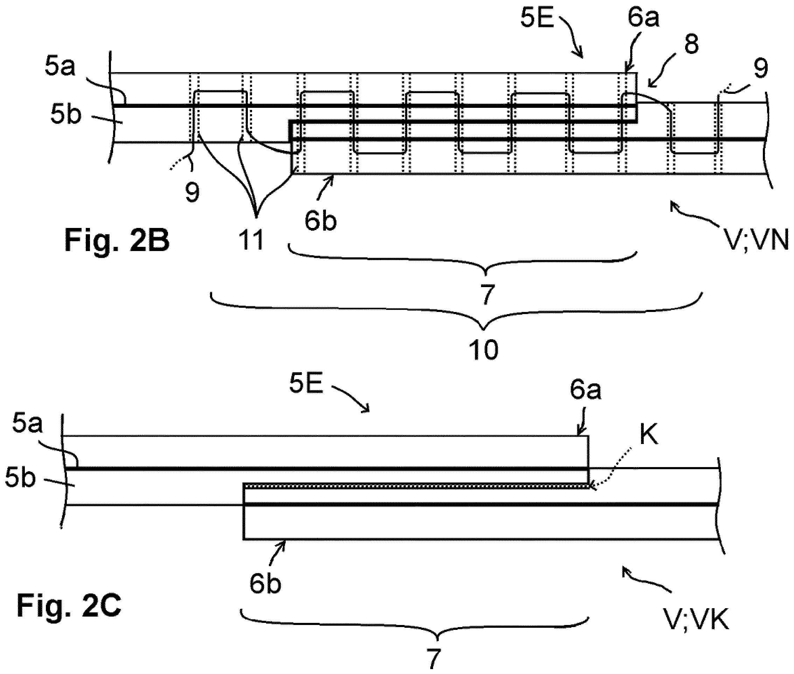

Der endlose Riemen 5E weist wie in Fig. 2B und Fig. 2C (und Fig. 2A für den noch offenen Riemen 5O) dargestellt eine Verstärkungseinlage 5a (Gewebelage) auf, die in eine Polymerschicht 5b (Gummischicht) eingebettet ist, so dass der endlose Riemen 5E im Betrieb insbesondere den Zugbelastungen standhalten kann. Das Herstellen des endlosen Riemens 5E erfolgt dadurch, dass ein erstes Riemenende 6a und ein zweites Riemenende 6b eines noch offenen Riemens 5O (s. Fig. 2A) durch eine ausgewählte Verbindungsart zusammengefügt werden. Dazu werden die beiden Riemenenden 6a, 6b des noch offenen Riemens 5O entsprechend vorgefertigt, anschließend zusammengebracht, beispielsweise überlappend aufeinandergelegt, und dann eine Riemenverbindung V zwischen beiden Riemenenden 6a, 6b ausgebildet, so dass der endlose Riemen 5E entsteht.

Gemäß einer Ausführungsform kann die Riemenverbindung V als eine Nähverbindung VN ausgebildet sein, bei der wie in Fig. 2B ausschnittsweise dargestellt die Riemenenden 6a, 6b in einem Überlappungsbereich 7 flächig übereinanderliegen und durch mindestens einen eine Naht 8 ausbildenden Faden 9 miteinander vernäht sind. Der mindestens eine Faden 9 durchdringt die beiden Riemenenden 6a, 6b in einem Nahtbereich 10 in mehreren Stichen 11, wobei die Verstärkungseinlage 5a bis zu den beiden Riemenenden 6a, 6b ausgedehnt ist und daher auch in den Nahtbereich 10 ragt. Die Stiche 11 und der mindestens eine Faden 9 durchdringen also auch die beiden übereinanderliegenden Enden der Verstärkungseinlage 5a an den Riemenenden 6a, 6b, so dass die Zugfestigkeit auch über den Nahtbereich 10 erhalten werden kann. Der Nahtbereich 10 kann hierbei auch über den Überlappungsbereich 7 hinausgehen, wie in Fig. 2B dargestellt.

Um einen Abrieb und damit eine Beschädigung des Fadens 9 im Betrieb des endlosen Riemens 5E zu vermeiden, ist dieser auch zwischen den Stichen 11 in die Polymerschicht 5b des endlosen Riemens 5E oberflächlich eingebettet, so dass der Faden 9 vorzugsweise vollständig unterhalb von Oberflächen des endlosen Riemens 5E verläuft, wie in Fig. 2B dargestellt. Dies kann beispielsweise durch eine entsprechend hohe Fadenspannung beim Vernähen erreicht werden.

Um die Riemenenden 6a, 6b des noch offenen Riemens 5O für diese Nähverbindung VN vorzufertigen, können diese beispielsweise gegensätzlich abgestuft werden, wie in Fig. 2A dargestellt. Dazu wird die jeweils innenliegende äußere Decklage der Polymerschicht 5b an den beiden Riemenenden 6a, 6b unter Ausbildung jeweils einer Stufe 5c zumindest teilweise abgetragen. Dadurch kann ein Überstand im Überlappungsbereich 7 verringert werden, was den Lauf des endlosen Riemens 5E sowie dessen Dauerhaltbarkeit verbessert. Grundsätzlich kann aber auch eine Überlappung ohne eine solche gegensätzliche Abstufung vorgesehen sein.

Alternativ dazu kann die Riemenverbindung V gemäß einer weiteren Ausführungsform, die in Fig. 2C dargestellt ist, als eine Klebeverbindung VK ausgebildet sein, bei der die Riemenenden 6a, 6b in dem Überlappungsbereich 7 flächig übereinanderliegend zusammengeklebt werden bzw. eine flächige stoffschlüssige Verbindung zwischen beiden ausgebildet wird. Die Riemenenden 6a, 6b können dabei ebenso wie bei der Nähverbindung VN derartig vorgefertigt werden, dass durch ein zumindest teilweises Abtragen der Decklage der Polymerschicht 5b eine Stufe 5c ausgebildet wird, wie in Fig. 2A und 2C dargestellt. Es ist aber auch eine Ausführung ohne eine solche Stufe 5c denkbar.

Eine Klebeverbindung VK wird dann beispielsweise dadurch ausgebildet, dass ein beliebiges Klebemittel K im Überlappungsbereich 7 auf die abgestuften Riemenenden 6a, 6b, und zwar auf die einander zugewandten Oberflächen, aufgetragen wird. Nach dem überlappenden Aufeinanderlegen der Riemenenden 6a, 6b wird unter Ausübung eines Drucks über das Klebemittel K eine stoffschlüssige Verbindung ausgebildet. Die Klebeverbindung VK und die Nähverbindung VN können im Übrigen auch miteinander kombiniert werden.

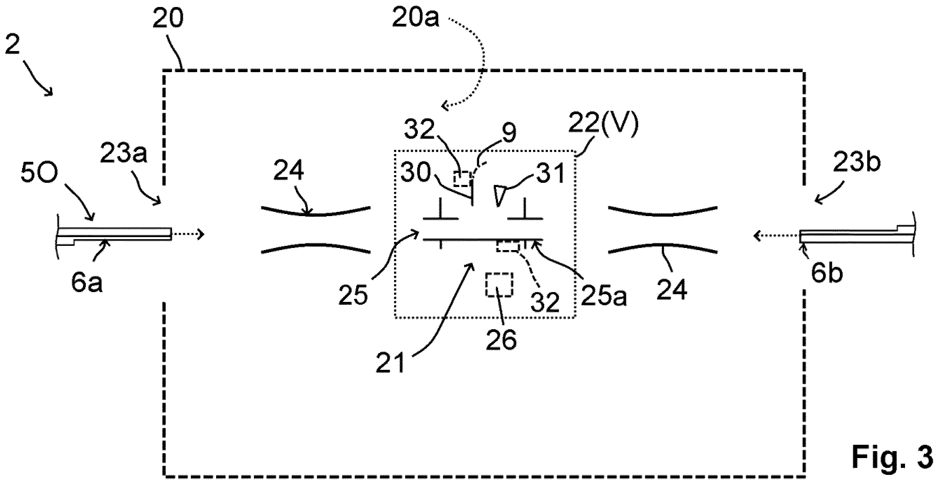

Gemäß der Erfindung ist vorgesehen, dass das Herstellen des endlosen Riemens 5E mithilfe einer Verbindungsmaschine 20 erfolgt, die in Fig. 3 schematisch dargestellt ist. Das Herstellen des endlosen Riemens 5E erfolgt dabei
- nachdem die Riemenenden 6a, 6b des noch offenen Riemens 5O in entsprechender Weise vorgefertigt wurden, insbesondere abgelängt wurden und anschließend beispielsweise wie oben beschrieben abgestuft oder anderweitig vorbereitet wurden, und
- nachdem der noch offene Riemen 5O zumindest teilweise in das Rollensystem 1 um die Umlenkrolle(n) 3 und die Antriebsrolle(n) 4 umgelegt bzw. eingefädelt wurde. Die Verbindungmaschine 20 kommt also im zumindest teilweise bereits in das Rollensystem 1 montierten Zustand des noch offenen Riemens 5O zum Einsatz.

Die Verbindungsmaschine 20 weist dabei wie in Fig. 3 dargestellt einen Arbeitsbereich 21 auf, in dem sich eine entsprechende Verbindungseinheit 22 befindet, die dazu eingerichtet ist, die jeweilige Riemenverbindung V, d.h. die Klebeverbindung VK und/oder die Nähverbindung VN, auszubilden.

Der Arbeitsbereich 21 ist insbesondere über ein erstes offenes Ende 23a und ein zweites offenes Ende 23b, die sich an der Verbindungsmaschine 20 gegenüberliegen, zugänglich. Über diese beiden offenen Enden 23a, 23b können die Riemenenden 6a, 6b von gegenüberliegenden Seiten in den Arbeitsbereich 21 gebracht werden. In dem Arbeitsbereich 21 sind (optional) Führungsmittel 24 angeordnet, beispielsweise Führungsprofile oder dergleichen, die dafür sorgen, dass die über die offenen Enden 23a, 23b eingebrachten Riemenenden 6a, 6b automatisch an die korrekte Position im Arbeitsbereich 21 relativ zu der Verbindungseinheit 22 geführt werden. Die Verbindungsmaschine 20 kann aber auch seitlich, z.B. frontseitig, eine weitere Zugangsöffnung 20a aufweisen, über die ein Benutzer die über die offenen Enden 23a, 23b eingebrachten Riemenenden 6a, 6b manuell in die korrekte Position relativ zu der Verbindungseinheit 22 im Arbeitsbereich 21 führen kann.

In der Verbindungseinheit 22 ist eine Fixiervorrichtung 25, beispielsweise mit ein oder mehreren manuell oder automatisch betätigbaren Klemmen oder Stempeln und einem Arbeitstisch 25a oder einer Platte oder dergleichen, vorgesehen, die dafür sorgt, dass die beiden im Arbeitsbereich 21 positionierten Riemenenden 6a, 6b fixiert werden können, insbesondere relativ zueinander fixiert werden können. Die Verbindungseinheit 22 weist dann je nach Verbindungsart bzw. auszubildender Riemenverbindung V eine relativ zu den Riemenenden 6a, 6b verstellbare Nadel 30 mit einer Fadenzuführung (für das Ausbilden der Nähverbindung VN) und/oder (eine) verstellbare Düse(n) 31 (für das Ausbilden einer Klebeverbindung VK) auf.

Im Falle einer Nähverbindung VN werden die Riemenenden 6a, 6b übereinanderliegend bzw. sich überlappend über die Fixiervorrichtung 25 fixiert. Anschließend wird der Faden 9 über die Nadel 30 in mehreren Stichen 11 durch die sich im Überlappungsbereich 7 überlappenden Riemenenden 6a, 6b gestoßen, um die Naht 8 in dem Nahtbereich 10 auszubilden, wie in Fig. 2B dargestellt. Die Nadel 30 wird dazu über einen entsprechenden Aktuator 32 in dem Nahtbereich 10 horizontal über die überlappenden Riemenenden 6a, 6b geführt, entsprechend einer vorher festgelegten Nahtform. Währenddessen wird die Nadel 30 wie bei einer Nähmaschine sich wiederholend vertikal durch die sich überlappenden Riemenenden 6a, 6b gestoßen, um die Stiche 11 auszubilden und den Faden 9 durch diese Stiche 11 zu führen.

Es kann aber auch vorgesehen sein, dass beispielsweise die horizontale Bewegung der Nadel 30 relativ zu den Riemenenden 6a, 6b dadurch erreicht wird, dass die beiden relativ zueinander fixierten Riemenenden 6a, 6b unterhalb der Nadel 30 horizontal bewegt werden. Dies kann beispielsweise über einen horizontal beweglichen Arbeitstisch 25a oder eine horizontal bewegliche Platte, an dem/der die Riemenenden 6a, 6b fixiert sind, erfolgen. Entsprechend weist dann (auch) die Fixiervorrichtung 25 einen Aktuator 32 auf, beispielsweise am Arbeitstisch 25a.

Im Falle einer Klebeverbindung VK werden die Riemenenden 6a, 6b über die Fixiervorrichtung 25 zunächst fixiert (optional), ohne dass sich diese zwangsläufig überlappen müssen. Über die Düse(n) 31 wird beispielsweise während einer horizontalen Bewegung Klebemittel K auf zumindest eines der Riemenenden 6a, 6b aufgetragen, insbesondere auf die einander zugewandten Oberfläche(n) der Riemenenden 6a, 6b, die später im Überlappungsbereich 7 aufeinanderliegen. Anschließend werden die beiden Riemenenden 6a, 6b im Überlappungsbereich 7 übereinandergelegt und anschließend geeignet fixiert, so dass sich unter Druck eine stoffschlüssige Verbindung zwischen beiden ausbilden kann. Dazu kann optional eine Heizeinheit 26 vorgesehen sein, um eine zusätzliche Wärmeeinwirkung zum Aktivieren des Klebemittels K zu erreichen.

Nachdem die jeweilige Riemenverbindung V; VN, VK ausgebildet wurde, kann die Verbindungsmaschine 20 vom somit hergestellten endlosen Riemen 5E entnommen werden. Dazu können die offenen Enden 23a, 23b beispielsweise als einseitig (zur Frontseite hin) offene Schlitze oder Öffnungen ausgeführt sein und/oder die Verbindungsmaschine 20 kann aufgeklappt werden, um den endlosen Riemen 5E aus dem Arbeitsbereich 21 zu entfernen. Der endlose Riemen 5E kann dann in dem jeweiligen Rollensystem 1 entsprechend in Betrieb genommen werden.

### Bezugszeichenliste

- 1: Rollensystem
- 2: landwirtschaftliche Maschine
- 3: Umlenkrolle
- 4: Antriebsrolle
- 5a: Verstärkungseinlage
- 5b: Polymerschicht
- 5c: Stufe
- 5E: endloser Riemen
- 5O: offener Riemen
- 6a: erstes Riemenende
- 6b: zweites Riemenende
- 7: Überlappungsbereich
- 8: Naht
- 9: Faden
- 10: Nahtbereich
- 11: Stich
- 20: Verbindungsmaschine
- 20a: Zugangsöffnung
- 21: Arbeitsbereich
- 22: Verbindungseinheit
- 23a: erstes offenes Ende
- 23b: zweites offenes Ende
- 24: Führungsmittel
- 25: Fixiervorrichtung
- 25a: Arbeitstisch
- 26: Heizeinheit
- 30: Nadel
- 31: Düse
- 32: Aktuator
- K: Klebemittel
- V: Riemenverbindung
- VK: Klebeverbindung
- VN: Nähverbindung

## Patentansprüche

1. Verfahren zum Herstellen eines endlosen Riemens (5E) für eine landwirtschaftliche Maschine (2), beispielsweise für eine Ballenpresse, aus einem offenen Riemen (5O) mit einer Verstärkungseinlage (5a), die in eine Polymerlage (5b) eingebettet ist, mit mindestens den folgenden Schritten:
- Bereitstellen des offenen Riemens (5O), wobei der offene Riemen (5O) ein erstes Riemenende (6a) und ein zweites Riemenende (6b) aufweist und der offene Riemen (5O) in ein Rollensystem (1) der landwirtschaftlichen Maschine (2) derartig eingebracht ist, dass der offene Riemen (5O) auf mindestens einer Umlenkrolle (3) und/oder auf mindestens einer Antriebsrolle (4) des Rollensystems (1) aufliegt;
- Bereitstellen einer Verbindungsmaschine (20);
- Positionieren des ersten Riemenendes (6a) des in das Rollensystem (1) eingebrachten offenen Riemens (5O) in einem Arbeitsbereich (21) der Verbindungmaschine (20);
- Positionieren des zweiten Riemenendes (6b) des in das Rollensystem (1) eingebrachten offenen Riemens (5O) in dem Arbeitsbereich (21) der Verbindungmaschine (20);
- Fixieren der beiden in dem Arbeitsbereich (21) positionierten Riemenenden (6a, 6b);
- Ausbilden einer Riemenverbindung (V) zwischen den beiden Riemenenden (6a, 6b) durch eine sich im Arbeitsbereich (21) der Verbindungsmaschine (20) befindliche Verbindungseinheit (22) zum Ausbilden des endlosen Riemens (5E).

2. Verfahren nach Anspruch 1, **dadurch gekennzeichnet, dass** die beiden Riemenenden (6a, 6b) des offenen Riemens (5O) derartig in dem Arbeitsbereich (21) positioniert und fixiert werden, dass sich die beiden Riemenenden (6a, 6b) in einem Überlappungsbereich (7) überlappen, und die beiden Riemenenden (6a, 6b) im einander überlappendenden Zustand über die Riemenverbindung (V) miteinander verbunden werden.

3. Verfahren nach Anspruch 1 oder 2, **dadurch gekennzeichnet, dass** die Riemenverbindung (V) eine Nähverbindung (VN) ist, wobei die in der Verbindungsmaschine positionierten und fixierten Riemenenden (6a, 6b) zum Ausbilden der Nähverbindung (VN) durch mindestens einen eine Naht (8) ausbildenden Faden (9) miteinander vernäht werden, wobei der mindestens eine Faden (9) die beiden Riemenenden (6a, 6b) in einem Nahtbereich (10) in mehreren Stichen (11) durchdringt.

4. Verfahren nach Anspruch 3, **dadurch gekennzeichnet, dass** die Verstärkungseinlage (5a) bis zu den beiden Riemenenden (6a, 6b) ausgedehnt ist und daher auch in den Nahtbereich (10) ragt und von den Stichen (11) und dem Faden (9) durchstoßen wird.

5. Verfahren nach Anspruch 3 oder 4, **dadurch gekennzeichnet, dass** die Verbindungseinheit (22) in der Verbindungsmaschine (20) eine Nadel (30) aufweist, in der der Faden (9) aufgenommen ist und die derartig relativ zu den in dem Arbeitsbereich (21) positionierten und fixierten Riemenenden (6a, 6b) bewegt und in dem Nahtbereich (10) wiederholend durch die Riemenenden (6a, 6b) gestoßen wird, dass die Stiche (11) ausgebildet und der mindestens eine Faden (9) durch die ausgebildeten Stiche (11) geführt wird, um in dem Nahtbereich (10) die Naht (8) auszubilden.

6. Verfahren nach einem der vorhergehenden Ansprüche, **dadurch gekennzeichnet, dass** die Riemenverbindung (V) eine Klebeverbindung (VK) ist, wobei die beiden positionierten und fixierten Riemenenden (6a, 6b) zum Ausbilden der Klebeverbindung (VK) durch ein Klebemittel (K) stoffschlüssig miteinander verbunden werden.

7. Verfahren nach Anspruch 6, **dadurch gekennzeichnet, dass** die Verbindungseinheit (22) in der Verbindungsmaschine (20) mindestens eine Düse (31) aufweist, durch die das Klebemittel (K) flächig auf zumindest eines der beiden Riemenenden (6a, 6b) aufgetragen wird, so dass bei einem nachträglichen Aufeinanderlegen und Gegeneinanderdrücken der beiden Riemenenden (6a, 6b) eine Klebeverbindung (VK) ausgebildet wird.

8. Verbindungsmaschine (20) zum Herstellen eines endlosen Riemens (5E) für eine landwirtschaftliche Maschine (2), insbesondere nach einem Verfahren nach einem der vorhergehenden Ansprüche, wobei die Verbindungsmaschine (20) mindestens aufweist:
- einen Arbeitsbereich (21);
- ein erstes offenes Ende (23a) zum Zuführen eines ersten Riemenendes (6a) eines in ein Rollensystem (1) einer landwirtschaftlichen Maschine (2) eingebrachten offenen Riemens (5O) in den Arbeitsbereich (21) der Verbindungsmaschine (20);
- ein zweites offenes Ende (23b) zum Zuführen eines zweiten Riemenendes (6b) des in das Rollensystem (1) der landwirtschaftlichen Maschine (2) eingebrachten offenen Riemens (5O) in den Arbeitsbereich (21) der Verbindungsmaschine (20);
- eine Fixiervorrichtung (25) zum Fixieren der Riemenenden (6a, 6b) in dem Arbeitsbereich (21); und
- eine in dem Arbeitsbereich (21) der Verbindungsmaschine (20) angeordnete Verbindungseinheit (22) zum Ausbilden einer Riemenverbindung (V) zwischen den beiden fixierten Riemenenden (6a, 6b) und zum Ausbilden des endlosen Riemens (5E) innerhalb des Rollensystems (1) der landwirtschaftlichen Maschine (2).
